# EUROPEAN PATENT SPECIFICATION

(11) **EP 4 206 894 B1**
(45) Date of publication and mention of the grant of the patent: **29.01.2025**
(21) Application number: 21881665.0
(22) Date of filing: 12.08.2021
(51) Int. Cl.: G06F 3/12, H04N 1/203, H04N 1/32

(54) **IMAGE PROCESSING METHOD AND DEVICE**
BILDVERARBEITUNGSVERFAHREN UND -VORRICHTUNG
PROCÉDÉ ET DISPOSITIF DE TRAITEMENT D'IMAGES

(30) Priority: 22.10.2020 CN 202011140527
(43) Date of publication of application: 05.07.2023
(73) Proprietor: Zhuhai Pantum Electronics Co., Ltd., Zhuhai, Guangdong (CN)
(72) Inventor: SHANG, Yunying, Zhuhai, Guangdong 519060 (CN); HU, Dongcheng, Zhuhai, Guangdong 519060 (CN); YU, Han, Zhuhai, Guangdong 519060 (CN)
(74) Representative: Sun, Yiming
(86) International application number: PCT/CN2021/112166
(87) International publication number: WO 2022/083246

(56) References cited:
- CN-A- 102 625 013
- CN-A- 103 209 284
- CN-A- 108 171 110
- CN-A- 112 199 058
- JP-A- 2010 119 063
- JP-A- 2012 028 923
- US-A1- 2010 002 935
- US-A1- 2019 230 246

## Description

This application claims priority to Chinese Patent Application No. 202011140527.6, titled "IMAGE PROCESSING METHOD AND APPARATUS", filed with China National Intellectual Property Administration (CNIPA) on October 22, 2020, which is incorporated herein by reference in its entirety.

### TECHNICAL FIELD

This application relates to an image processing method, and specifically, to an image processing method and apparatus used for scanning and sorting for a booklet or a book after splitting.

### BACKGROUND

In the prior art, after a bifold-bound book or booklet is split and each page is scanned, scanned images obtained does not have a page order corresponding to that of the original book or booklet, and every two pages are located on the same scanned image. Consequently, a user needs to organize and crop the images, which is troublesome and inefficient.

Patent documents JP2012028923 and JP2010119063 disclose an image processing method for scanning a book. The method involves obtaining a double-page scanning picture. The double-page scanning picture is obtained by performing double-sided scanning to a scanning page paper. The double-page scanning picture is splitted to obtain a single-page scanning picture. The single-page scanning picture is ordered according to a page sequence of the scanned original booklet.

### SUMMARY

To resolve the foregoing problem existing in the prior art, the main objective of this application is to provide an image processing method and apparatus that can automatically split and sort scanned images with high efficiency.

To achieve the foregoing objective, the following technical solutions are specifically adopted in this application:
This application provides an image processing method, where the image processing method includes:
obtaining a double-page scanned image, where the double-page scanned image is obtained by performing double-sided scan on a to-be-scanned sheet;
splitting the double-page scanned image to obtain single-page scanned images; and sorting the single-page scanned images according to a page order of the to-be-scanned sheet, where the page order is one of the following orders: from left to right, from right to left, from top to bottom, and from bottom to top.

Preferably, the splitting the double-page scanned image to obtain single-page scanned images includes:
obtaining a width and a height of the double-page scanned image;
determining a relationship between the width and the height of the double-page scanned image;
when it is determined that the width of the double-page scanned image is greater than the height, splitting the double-page scanned image equally into two equal-width single-page scanned images; and
when it is determined that the height of the double-page scanned image is greater than the width, splitting the double-page scanned image equally into two equal-height single-page scanned images.

The sorting the single-page scanned images according to a page order of the to-be-scanned sheet includes:
setting a first list and a second list;
according to the page order, placing single-page scanned images whose page numbers are 1 to n/2 in the first list, and placing single-page scanned images whose page numbers are (n/2)+1 to n in the second list, where n represents a total page quantity of a booklet or a book, and n is an even number; and
sorting the single-page scanned images in the first list and the second list in ascending or descending order according to the page order.

Preferably, when the scan to be performed on the to-be-scanned sheet is platform scan, the sorting the single-page scanned images according to a page order of the to-be-scanned sheet includes:
determining whether the double-page scanned image is a first-side scanned image, where the first-side scanned image is a scanned image obtained by scanning a side of the to-be-scanned sheet facing a cover body;
determining to save the single-page scanned image in the first list or the second list according to the determining result;
re-sorting the single-page scanned images saved in the first list in ascending or descending order according to the page order; and
re-sorting the single-page scanned images saved in the second list in ascending or descending order according to the page order.

Preferably, the determining to save the single-page scanned image in the first list or the second list according to the determining result includes:
when the determining result is yes, the single-page scanned images located on one side of the double-page scanned image before splitting is saved in the first list, and the single-page scanned images located on the other side of the double-page scanned image before splitting is saved in the second list; or
when the determining result is no, the single-page scanned images located on one side of the double-page scanned image before splitting is saved in the second list, and the single-page scanned images located on the other side of the double-page scanned image before splitting is saved in the first list.

Preferably, the image processing method further includes the following step:
rotating the single-page scanned image or the double-page scanned image according to a placement manner and the page order of the to-be-scanned sheet or a text direction of the scanned image to conform to a reading habit of a user.

Correspondingly, this application further discloses an image processing apparatus, where the image processing apparatus includes:
an obtaining unit, configured to obtain a double-page scanned image, where the double-page scanned image is obtained by performing double-sided scan on a to-be-scanned sheet;
a splitting unit, configured to split the double-page scanned image to obtain single-page scanned images; and
a sorting unit, configured to sort the single-page scanned images according to a page order of the to-be-scanned sheet, where the page order is one of the following orders: from left to right, from right to left, from top to bottom, and from bottom to top.

Preferably, the splitting unit includes:
a determining unit, configured to obtain a width and a height of the double-page scanned image, and determine a relationship between the width and the height of the double-page scanned image; and
a splitting subunit, configured to: when it is determined that the width of the double-page scanned image is greater than the height, split the double-page scanned image equally into two equal-width single-page scanned images; and when it is determined that the height of the double-page scanned image is greater than the width, split the double-page scanned image equally into two equal-height single-page scanned images.

The sorting unit includes:
a setting unit, configured to set a first list and a second list;
a saving unit, configured to: according to the page order, place single-page scanned images whose page numbers are 1 to n/2 in the first list, and place single-page scanned images whose page numbers are (n/2)+1 to n in the second list, where n represents a total page quantity of a booklet or a book, and n is an even number; and a sorting subunit, configured to sort the single-page scanned images in the first list and the second list in ascending or descending order according to the page order.

Preferably, when the scan to be performed on the to-be-scanned sheet is platform scan, the sorting unit further includes a judging unit, where:
the judging unit is configured to determine whether the double-page scanned image is a first-side scanned image, where the first-side scanned image is a scanned image obtained by scanning a side of the to-be-scanned sheet facing a cover body;
the saving unit is configured to determine to save the single-page scanned image in the first list or the second list according to the determining result; and
the sorting subunit is configured to re-sort the single-page scanned images saved in the first list in ascending or descending order according to the page order; and re-sort the single-page scanned images saved in the second list in ascending or descending order according to the page order.

Preferably, the saving unit is specifically configured to:
when the determining result is yes, the single-page scanned images located on one side of the double-page scanned image before splitting is saved in the first list, and the single-page scanned images located on the other side of the double-page scanned image before splitting is saved in the second list; or
when the determining result is no, the single-page scanned images located on one side of the double-page scanned image before splitting is saved in the second list, and the single-page scanned images located on the other side of the double-page scanned image before splitting is saved in the first list.

Preferably, the image processing apparatus further includes a rotation unit, and the rotation unit is configured to rotate the single-page scanned image or the double-page scanned image according to a placement manner and the page order of the to-be-scanned sheet or a text direction of the scanned image to conform to a reading habit of a user.

Correspondingly, this application further provides a storage medium, where the storage medium includes a storage program, and when the storage program runs, a device on which the storage medium is located is controlled to perform the image processing method described above.

Compared with the prior art, in this application, after double-sided scan is performed on a to-be-scanned sheet to obtain a double-page scanned image, the double-page scanned image is split to obtain single-page scanned images, and then the single-page scanned image is automatically sorted according to a page order of the to-be-scanned sheet, so that a scanned image obtained by scanning is according to a page order consistent with a page order of an original booklet or books to be scanned, without being manually split or sorted, thereby saving time and labor, and increasing the efficiency.

### BRIEF DESCRIPTION OF THE DRAWINGS

FIG. 1(a) and FIG. 1(b) are each a schematic diagram showing that a to-be-scanned sheet is placed on a scanning device when a binding line is on a left side of an original.
FIG. 1(c) and FIG. 1(d) are each a schematic diagram showing that a to-be-scanned sheet is placed on a scanning device when a binding line is on a right side of an original.
FIG. 1(e) and FIG. 1(f) are each a schematic diagram showing that a to-be-scanned sheet is placed on a scanning device when a binding line is on an upper side of an original.
FIG. 1(g) and FIG. 1(h) are each a schematic diagram showing that a to-be-scanned sheet is placed on a scanning device when a binding line is on a lower side of an original.
FIG. 2 is a flowchart of an image processing method according to this application.
FIG. 3 is a flowchart of an image processing method according to an embodiment of this application.

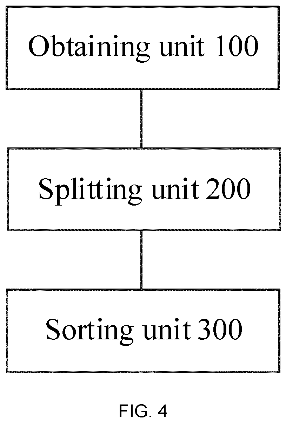

FIG. 4 is a module block diagram of an image processing apparatus according to an embodiment of this application.

### Reference Numerals:

1. scanning device body; 2. glass surface; 3. cover body; 4. to-be-scanned sheet.

### DETAILED DESCRIPTION

To make the objectives, technical solutions, and advantages of this application clearer, this application is further described in detail below with reference to the accompanying drawings and embodiments. It should be understood that specific embodiments described herein are merely used for illustrating this application and are not intended to limit this application.

In the description of this application, unless otherwise clearly specified and limited, the terms "first" and "second" are used only for the purpose of description, and should not be understood as indicating or implying relative importance; unless otherwise specified or stated, the term "a plurality of" refers to two or more; the terms "connection", "fixation" and so on should be understood in a broad sense, for example, "connection" may be a fixed connection, a detachable connection, an integrated connection, or an electrical connection; or may be a direct connection or an indirect connection through an intermediary. A person of ordinary skill in the art may understand specific meanings of the foregoing terms in the present disclosure based on a specific situation.

In the description of this specification, it should be understood that the orientation words such as "up" and "down" described in the embodiments of this application are described from the perspective shown in the accompanying drawings and should not be construed as a limitation to the embodiments of this application. In addition, in the context, it should be further understood that when referring to a component being connected "on" or "under" another component, it can be connected not only directly "on" or "under" another component, or can be indirectly "on" or "under" the another component through an intermediate component.

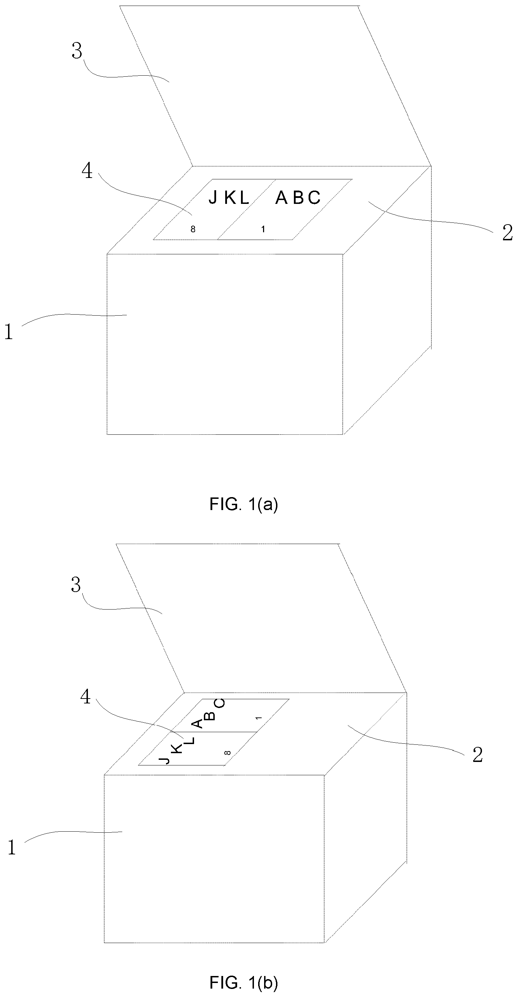

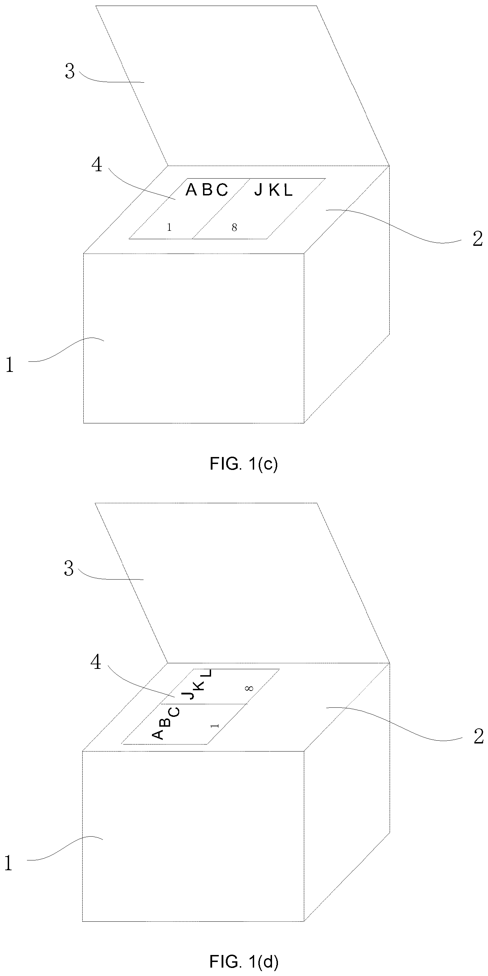

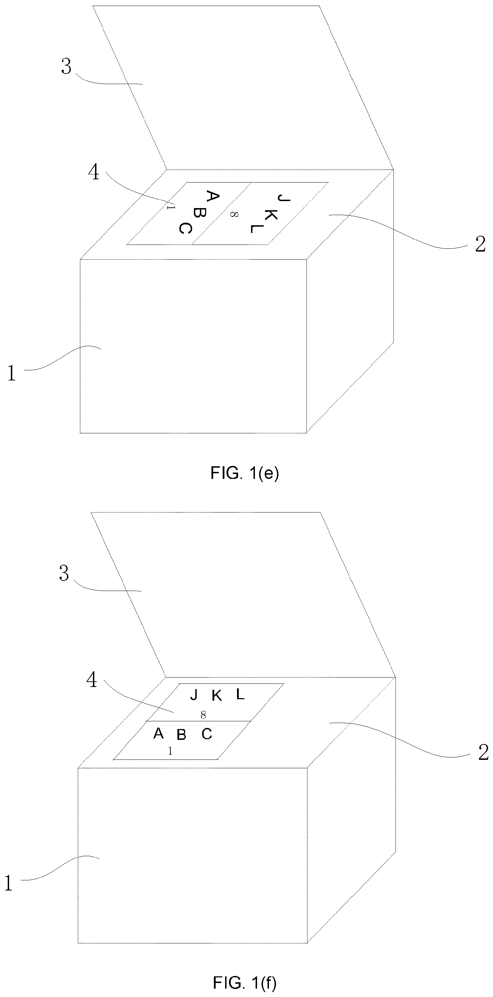

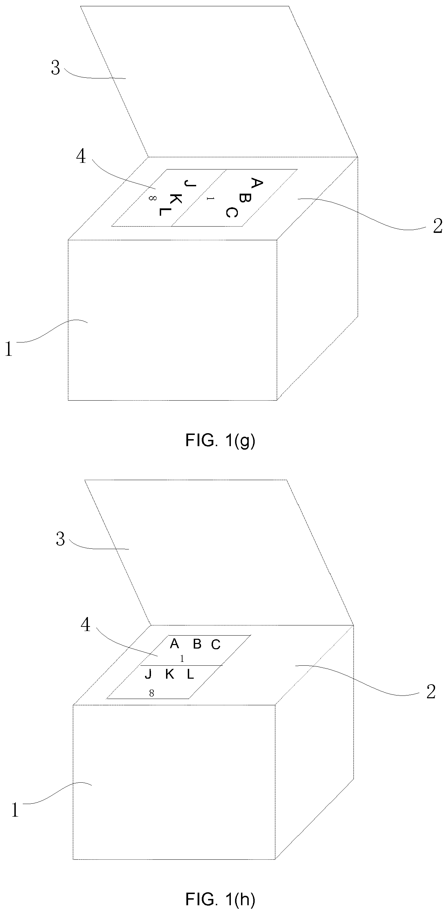

The binding of a book or a booklet is generally divided into several cases. Using a bi-fold booklet as an example, for binding manners of the bi-fold booklet, there are usually the following cases: In a first case, a binding line is on a left side of the booklet. In a second case, the binding line is on a right side of the booklet. In a third case, the binding line is on an upper side of the booklet. In a fourth case, the binding line is on a lower side of the booklet. For platform scan, in each of the foregoing binding manners, there are at least eight manners for placing each to-be-scanned sheet after splitting on a glass surface. Specifically, for example, for a booklet of eight pages in total, when the first page and the eighth page face a cover body 3, there are a total of four placement manners: placement in landscape orientation, placement in portrait orientation, frontal placement, and inverted placement. FIG. 1(a) shows placement in landscape orientation and in frontal manner of a to-be-scanned original in a case of left-side binding. FIG. 1(b) shows placement in portrait orientation and in frontal manner of a to-be-scanned original in a case of left-side binding. FIG. 1(f) shows placement in portrait orientation and in frontal manner of a to-be-scanned original in a case of upper-side binding. FIG. 1(e) shows placement in landscape orientation and in frontal manner of a to-be-scanned original in a case of upper-side binding. When the second page and the seventh page face the cover body 3, there are also a total of four placement manners: placement in landscape orientation, placement in portrait orientation, frontal placement, and inverted placement. Therefore, there are at least eight manners of placing a to-be-scanned sheet on a glass surface 2 (because the sheet may also be placed obliquely). Each of the foregoing binding manners is illustrated below with one of the placement manners as an example. For the first binding manner, a placement manner of the sheet on a scanning device may be shown in FIG. 1(a) and FIG. 1(b). For the second binding manner, a placement manner of the sheet on a scanning device may be shown in FIG. 1(c) and FIG. 1(d). For the third binding manner, a placement manner of the sheet on a scanning device may be shown in FIG. 1(e) and FIG. 1(f). For the fourth binding manner, a placement manner of the sheet on a scanning device may be shown in FIG. 1(g) and FIG. 1(h). It should be noted that, for the same booklet or book, each to-be-scanned sheet thereof needs to be placed in the same manner on the scanning device.

Further, binding manners of a to-be-scanned original correspond to different page orders. For example, a left-binding manner corresponds to a page order from right to left, and as shown in FIG. 1(a), a page whose page number is 1 is on the right. A right-binding manner corresponds to a page order from left to right, and as shown in FIG. 1(c), a page whose page number is 1 is on the left. A top-binding manner corresponds to a page order from bottom to top, and as shown in FIG. 1(f), a page whose page number is 1 is at the bottom. A bottom-binding manner corresponds to a page order from top to bottom, and as shown in FIG. 1(h), a page whose page number is 1 is at the top. A corresponding original document page order scan option (including four options: from right to left, from left to right, from bottom to top, and from top to bottom) is set on a panel of a scanning device or a scanning application or a scan drive of a computer. Subsequently, a user places, according to a browsing habit, the to-be-scanned original on a scanning platform for scanning, or a user then selects a placement manner (the user may select one of placement in landscape or portrait orientation and one of placement in frontal or inverted manner, or placement in frontal manner is set by default and a user selects one only from placement in landscape or portrait orientation). Certainly, in this application, alternatively, a user may place a to-be-scanned original into a flatbed scanner in sequential order of splitting without the need to set a placement manner. Regardless of placement in landscape or portrait orientation or placement in inverted or frontal manner, in an image processing method provided in this application, scanned images can be caused to be sorted according to the page order set by the user, to conform to a page number order of the booklet or book, thereby facilitating archiving and browsing by the user.

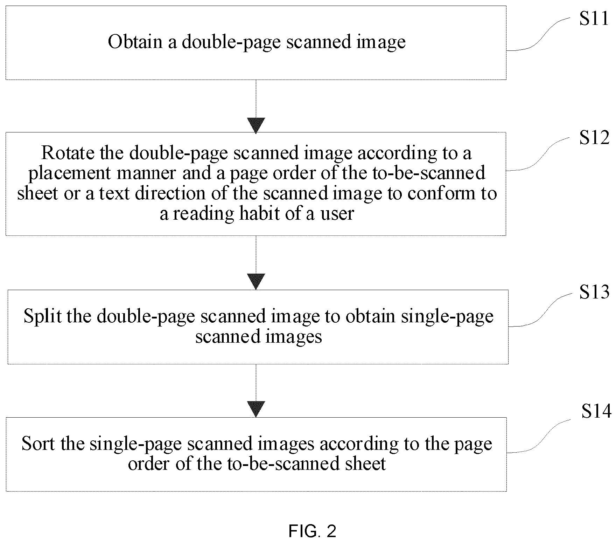

Referring to FIG. 2, this application discloses an image processing method. The image processing method is used for scanning and sorting for a bi-fold bound book or booklet. Specifically, the image processing method includes the following steps:
S11. Obtain a double-page scanned image, where the double-page scanned image is obtained by performing double-sided scan on a to-be-scanned sheet.
S12. Rotate the double-page scanned image according to a placement manner and a page order of the to-be-scanned sheet or a text direction of the scanned image to conform to a reading habit of a user.

In a first case, when the user performs platform scan on a booklet, there is no need to restrict a placement manner (for example, placement in landscape or portrait orientation, or placement in inverted or frontal manner) for the user. When a scan order of a to-be-scanned original is to place the to-be-scanned original on a glass platform of a scanner according to a splitting order of the booklet or a browsing habit or a browsing order, as shown in FIG. 1(a), the user scans each original sheet of a left-side binding manner in sequential order, there is no need to rotate the double-page scanned image or a single-page scanned image. However, when the user places the to-be-scanned original arbitrarily in landscape or portrait orientation or in inverted or frontal manner, a scanned double-page scanned image does not conform to the reading habit of the user, and text is reversed. Therefore, the image needs to be rotated. In this case, a direction of the text of the double-page scanned image may be recognized. If the text is recognized to be reversed and does not conform to the reading habit, the double-page scanned image may be rotated by an angle that conforms to the reading habit of the user.

In a second case, during scanning by the user, regardless of the binding manner, the user selects placement in landscape orientation. In this case, when a binding line of the booklet is located on a left side or a right side of the booklet, that is, when a placement manner of the to-be-scanned sheet on a printing device is shown in FIG. 1(a) and FIG. 1(c), a scanned image obtained after scanning of the sheet does not need to be rotated. When the binding line of the booklet is located on an upper side or a lower side of the booklet, that is, when a placement manner of the to-be-scanned sheet on the printing device is shown in FIG. 1(e) and FIG. 1(g), a scanned image obtained after scanning of the sheet needs to be rotated by 90°or 270°.

In a third case, during scanning, the user is allowed to select placement in portrait orientation (or placement in vertical orientation) for the to-be-scanned sheet. When placement in vertical orientation is performed, for the foregoing third and fourth binding manners, when the placement manner is shown in FIG. 1(f) and FIG. 1(h), a scanned image obtained after scanning of the sheet does not need to be rotated; and for the foregoing first and second binding manners, when the placement manner is shown in FIG. 1(b) and FIG. 1(d), a scanned image obtained after scanning of the sheet needs to be rotated by 90°or 270°.

The foregoing cases are only specific examples. When the placement manner by the user is not restricted, in this embodiment, the double-page scanned image may be rotated according to a recognized direction of text in a scanned image, or rotation of a scanned double-page scanned image may be set according to a selection by the user of a placement manner of a to-be-scanned original and a selection by the user of a page order of the to-be-scanned original (including four options: from right to left, from left to right, from bottom to top, and from top to bottom). Certainly, rotation by recognizing a direction of text can save time of setting parameters for the user, making it more convenient for the user to scan.

S13. Split the double-page scanned image to obtain single-page scanned images;
specifically, obtain a width and a height of the double-page scanned image, and determine a relationship between the width and the height of the double-page scanned image; when it is determined that the width of the double-page scanned image is greater than the height, split the double-page scanned image equally into two equal-width single-page scanned images; and when it is determined that the height of the double-page scanned image is greater than the width, split the double-page scanned image equally into two equal-height single-page scanned images.

S14. Sort the single-page scanned images according to the page order of the to-be-scanned sheet.

The sorting the single-page scanned images according to a page order of the to-be-scanned sheet includes:
setting a first list and a second list; according to the page order, placing single-page scanned images from page 1 to page n/2 in the first list, and placing single-page scanned images from page (n/2)+1 to page n in the second list, and sorting the single-page scanned images in the first list and the second list in ascending or descending order according to a page order of a scanned original, where n represents a total page quantity of the booklet or the book, and n is an even number.

Specifically, when the scan to be performed on the to-be-scanned sheet is platform scan, it is determined whether the double-page scanned image is a first-side scanned image, and it is determined to save the single-page scanned image in the first list or the second list according to a determining result; the single-page scanned images saved in the first list are re-sorted in ascending or descending order according to the page order of the to-be-scanned sheet; and the single-page scanned images saved in the second list are re-sorted in ascending or descending order according to the page order of the to-be-scanned sheet. In platform scan, when a to-be-scanned sheet 4 is placed on a glass surface 2 of a scanning device body 1, the first-side scanned image is a scanned image obtained by scanning a side of the to-be-scanned sheet 4 facing a cover body 3.

Further, when the double-page scanned image is a first-side scanned image, single-page scanned images located on one side of the double-page scanned image before splitting and after rotation are saved in the first list, and single-page scanned images located on the other side of the double-page scanned image before splitting and after rotation are saved in the second list. When the double-page scanned image is not a first-side scanned image, single-page scanned images located on one side of the double-page scanned image before splitting and after rotation are saved in the second list, and single-page scanned images located on the other side of the double-page scanned image before splitting and after rotation are saved in the first list. In an example in which the page order is from right to left, one side is a right side facing the user of a double-page scanned image that conforms to the reading habit of the user after rotation, and the other side is a left side facing the user of the double-page scanned image that conforms to the reading habit of the user after rotation. In an example in which the page order is from bottom to top, one side is a bottom side (or a bottom end) facing the user of a double-page scanned image that conforms to the reading habit of the user after rotation, and the other side is a top side (or a top end) facing the user of the double-page scanned image that conforms to the reading habit of the user after rotation.

If the scan manner is ADF paper feeding scan manner, front and back sides of an obtained double-page scanned image need to be distinguished according to different scanner models and paper feeding manners, and the front and back sides of the double-sided scanned image are split. If the booklet has n pages, a splitting result is to save single-page scanned images whose page numbers are 1 to n/2 in one document and save single-page scanned images whose page numbers are (n/2)+1 to n in another document, sort the two documents in ascending or descending order according to a page order to achieve sequencing matching a page number order of the booklet, and then combine the single-page scanned images in the two documents into one file, such as PDF, for archiving and reading by the user.

In this embodiment, the step of rotating the scanned image is performed before the step of splitting. It may be understood that in other embodiments, alternatively, the step of rotating the scanned image may be performed before the step of splitting. If splitting is performed before rotation, the rotation of a single-page scanned image is faster and the processing process is simpler.

This application discloses a specific implementation. In this embodiment, in an example in which the scan manner is platform scan, when a user selects a placement manner of placement in landscape orientation, as shown in FIG. 1(a), 1(c), 1(e), and 1(g), the image processing method specifically includes the following steps:
S201. Perform double-sided scan on a to-be-scanned sheet to obtain a double-page scanned image.
S202. Split the double-page scanned image to obtain single-page scanned images.
S203. Determine whether the single-page scanned image is a first-side scanned image.

When a determining result is yes, step S204 is performed. When the determining result is no, step S207 is performed.

S204. Determine whether a page order of the to-be-scanned sheet is from top to bottom or from bottom to top. Herein, it is determined according to a page order set by the user on a panel of a scanning device or on a scanning application.

When a determining result is yes, step S205 is performed. When the determining result is no, step S206 is performed.

S205. Rotate the single-page scanned image by 90°or 270° according to the page order of the to-be-scanned sheet.

S206.The single-page scanned images located on a left side of the double-page scanned image before splitting is saved in the first list, and the single-page scanned images located on a right side of the double-page scanned image before splitting is saved in the second list.

S207. Determine whether a page order of the to-be-scanned sheet is from top to bottom or from bottom to top.

S208. Rotate the single-page scanned image by 90° or 270° according to the page order of the to-be-scanned sheet.

S209. The single-page scanned images located on a left side of the double-page scanned image before splitting is saved in the second list, and the single-page scanned images located on a right side of the double-page scanned image before splitting is saved in the first list.

This method is for the case that the user places all to-be-scanned originals in landscape orientation and the user performs the placement in frontal manner by default, and regardless of the binding manners, the manners in which the user places a first sheet of the to-be-scanned original on the scanning platform are shown in FIG. 1(a), FIG. 1(c), FIG. 1(e), and FIG. 1(g). Therefore, after a double-page scanned image obtained after scanning is split, a single-page scanned image on a left side and a single-page scanned image on a right side are obtained, and the single-page scanned images are rotated according to the page order to conform to the reading habit of the user. For example, if the user places each to-be-scanned original in the manner shown in FIG. 1(e), after a double-sided scanned original obtained by scanning that is a first-side scanned image is split, single-page scanned images on the left and on the right need to be rotated clockwise by 270° to conform to the reading habit of the user.

S300. Determine whether the to-be-scanned sheet is the last sheet.

When a determining result is yes, step S301 is performed. When the determining result is no, go back to step S203.

S301. Re-sort, in ascending or descending order according to the page order, single-page scanned images saved in the first list or the second list.

If the page order of the to-be-scanned sheet is from right to left or from top to bottom, the single-page scanned images saved in the first list are re-sorted in reverse order of a saved order, and the single-page scanned image saved in the second list are re-sorted in ascending order of a saved order. If the page order of the to-be-scanned sheet is from left to right or from bottom to top, the single-page scanned images saved in the first list are re-sorted in ascending order of a saved order, and the single-page scanned image saved in the second list are re-sorted in reverse order of a saved order.

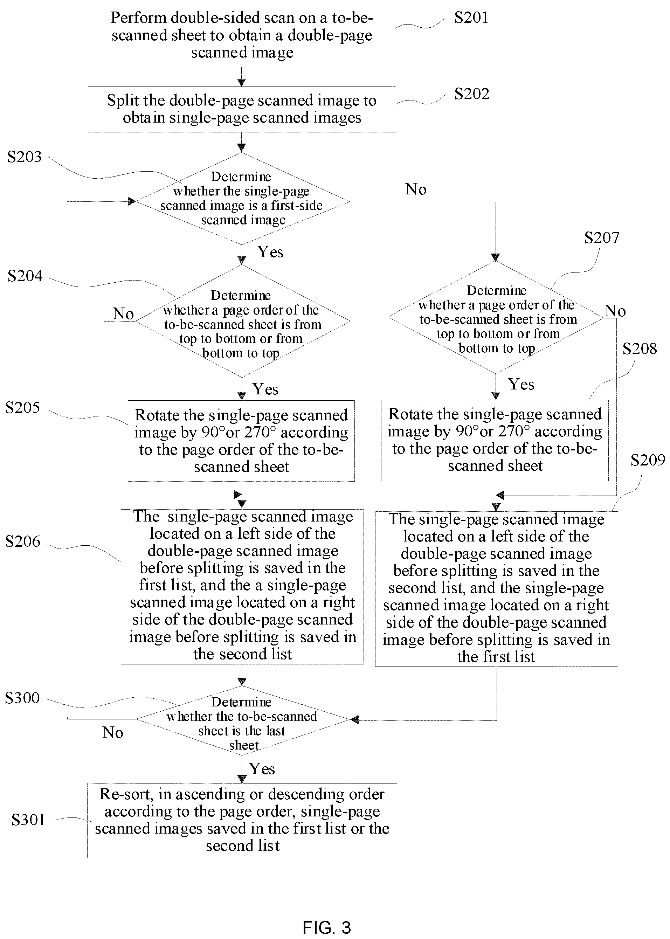

FIG. 3 above shows operations of the user to place all to-be-scanned originals in landscape orientation. When the user places to-be-scanned originals in vertical orientation, as shown in FIG. 1(b), FIG. 1(d), FIG. 1(f), and FIG. 1(h), it is determined in step 204 and step 207 in FIG. 3 whether a page order of a to-be-scanned sheet is from left to right or from right to left, and it is determined in step 206 and step 209 whether single-page scanned images are located on the top or the bottom of the double-page scanned image before splitting, to place them in different lists. Then, the single-page scanned images in the lists are re-sorted in ascending or descending order according to different page orders. Other steps are performed similarly, and no repetition is made.

In a specific scanning operation, the user places scanned sheets after splitting on the glass surface of the scanning device in a correct split order, then selects booklet scan, and selects a corresponding original document page order scan option to scan the original document then. After scanned images obtained after scanning are uploaded to a computer, the computer automatically splits and sorts the scanned images according to a booklet split option and the original document page order scan option set by the user, so that a page number order of finally obtained scanned images is consistent with a page number order of the original document, thereby saving time of splitting and sorting by the user, and facilitating scanning of a booklet-type original document by the user.

In addition, the application can also be based only on the selection of the original document page order scanning option by the user, allowing the user to place the original document on the glass surface of the scanning device in the correct splitting order. After the booklet scanning is selected, in the image processing method of the present disclosure, the scanned image can be rotated and split based on the recognition of the text direction of the scanned image, and the scanned images after splitting of each sheet are sorted according to the page order selected by the user. In this way, the sorting can be automatically performed according to the page number order of the booklet, so that parameter setting steps by the user can be saved, thereby making scanning easier and faster. Further, the image processing method of this application is also applicable to scanners with ADF. For scanning of booklets, the user needs to place a to-be-scanned original into a cassette according to a splitting order and previewing habit, and perform double-sided scanning of both sides of the to-be-scanned original with two paper feeding operations or perform front and back scanning of one page with one paper feeding operation due to configuration of two scanning heads. The images are rotated based on the recognition of the text direction of the scanned images to make output images conform to the reading habit of the user, and double-page images can be split into single-page images for automatic sorting, so that a page number order of finally obtained scanned images is consistent with a page number order of the original document, thereby saving time of splitting and sorting by the user, and facilitating scanning of a booklet-type original document by the user.

Correspondingly, this application further discloses an image processing apparatus. The image processing apparatus may be a software apparatus of a PC, or may be a scanner, and sorts scanned images by using the image processing method described above. The image processing apparatus includes an obtaining unit 100, a splitting unit 200, and a sorting unit 300. The obtaining unit 100 is configured to obtain a double-page scanned image, where the double-page scanned image is obtained by performing double-sided scan on a to-be-scanned sheet. The splitting unit 200 is configured to split the double-page scanned image to obtain single-page scanned images. The sorting unit 300 is configured to sort the single-page scanned images according to a page order of the to-be-scanned sheet. The page order is one of the following orders: from left to right, from right to left, from top to bottom, and from bottom to top. The image processing apparatus may be a scanning device, or may be a computer for performing the image processing method described above. Therefore, the obtaining unit 100 may be a hardware scanning unit of the scanning device, or may be a constituent part of a scanning application or a driver module on the computer.

Specifically, the splitting unit 200 includes a determining unit and a splitting subunit. The determining unit is configured to obtain a width and a height of the double-page scanned image, and determine a relationship between the width and the height of the double-page scanned image. The splitting subunit is configured to: when it is determined that the width of the double-page scanned image is greater than the height, split the double-page scanned image equally into two equal-width single-page scanned images; and when it is determined that the height of the double-page scanned image is greater than the width, split the double-page scanned image equally into two equal-height single-page scanned images.

The sorting unit 300 includes a setting unit, a saving unit, and a sorting subunit. The setting unit is configured to set a first list and a second list. The saving unit is configured to: according to the page order, place single-page scanned images whose page numbers are 1 to n/2 in the first list, and place single-page scanned images whose page numbers are (n/2)+1 to n in the second list, where n represents a total page quantity of a booklet or a book, and n is an even number. The sorting subunit is configured to sort the single-page scanned images in the first list and the second list in ascending or descending order according to the page order.

Further, when a scan manner is platform scan, the sorting unit further includes a judgment unit. The judgment unit is configured to determine whether the double-page scanned image is a first-side scanned image, where the first-side scanned image is a scanned image obtained by scanning a side of the to-be-scanned sheet facing a cover body. The saving unit is configured to determine to save the single-page scanned image in the first list or the second list according to the determining result. The sorting subunit is configured to re-sort the single-page scanned images saved in the first list in ascending or descending order of a saving order according to the page order; and re-sort the single-page scanned images saved in the second list in ascending or descending order of a saving order according to the page order.

Further, the saving unit is specifically configured to: when the determining result is yes, the single-page scanned images located on one side of the double-page scanned image before splitting is saved in the first list, and the single-page scanned images located on the other side of the double-page scanned image before splitting is saved in the second list; and when the determining result is no, the single-page scanned images located on one side of the double-page scanned image before splitting is saved in the second list, and the single-page scanned images located on the other side of the double-page scanned image before splitting is saved in the first list.

Still further, the image processing apparatus further includes a rotation unit. The rotation unit is configured to rotate (for example, rotate by 90° or 270°) the single-page scanned image or the double-page scanned image according to a placement manner and the page order of the to-be-scanned sheet or a text direction of the scanned image to conform to a reading habit of a user. For example, when the to-be-scanned sheet is placed in landscape orientation, as shown in FIG. 1(e), and the page order is from bottom to top, or as shown in FIG. 1(g), the page order is from top to bottom, the rotation unit is configured to rotate a scanned image obtained through scanning clockwise by 270°. Alternatively, when the to-be-scanned sheet is placed in vertical orientation, and as shown in FIG. 1(b), the page order is from right to left, or as shown in FIG. 1(d), the page order is from left to right, the rotation unit is configured to rotate a scanned image obtained through scanning clockwise by 90°.

Correspondingly, this application further discloses a storage medium, where the storage medium includes a storage program. When the storage program runs, a device on which the storage medium is located is controlled to perform the following steps: obtaining a double-page scanned image; rotating the double-page scanned image according to a placement manner or a page order of a to-be-scanned sheet or a text direction of a scanned image to conform to a reading habit of a user; splitting the double-page scanned image to obtain single-page scanned images; and sorting the single-page scanned images according to the page order of the to-be-scanned sheet. The double-page scanned image is obtained by performing double-sided scan on the to-be-scanned sheet. The page order is one of the following orders: from left to right, from right to left, from top to bottom, and from bottom to top.

The foregoing description is only a preferred specific implementation of this application, but the scope of protection of this application is not limited thereto. Therefore, the protection scope of this application should be subject to the protection scope of the claims.

## Claims

1. An image processing method, comprising:
obtaining (S11) a double-page scanned image, wherein the double-page scanned image is obtained by performing double-sided scan on a to-be-scanned sheet (4);
splitting (S13, S202) the double-page scanned image to obtain single-page scanned images; and
sorting (S14) the single-page scanned images according to a page order of the to-be-scanned sheet (4), wherein the page order is one of the following orders: from left to right, from right to left, from top to bottom, and from bottom to top, **characterized in that**, sorting (S14) the single-page scanned images according to a page order of the to-be-scanned sheet (4) comprises:
setting a first list and a second list;
according to the page order, placing single-page scanned images whose page numbers are 1 to n/2 in the first list, and placing single-page scanned images whose page numbers are (n/2)+1 to n in the second list, wherein n represents a total page quantity of a booklet or a book, and n is an even number; and
sorting the single-page scanned images in the first list and the second list in ascending or descending order according to the page order.

2. The image processing method according to claim 1, wherein the splitting (S13, S202) the double-page scanned image to obtain single-page scanned images comprises:
obtaining a width and a height of the double-page scanned image;
determining a relationship between the width and the height of the double-page scanned image;
when it is determined that the width of the double-page scanned image is greater than the height, splitting the double-page scanned image equally into two equal-width single-page scanned images; or
when it is determined that the height of the double-page scanned image is greater than the width, splitting the double-page scanned image equally into two equal-height single-page scanned images.

3. The image processing method according to claim 1, wherein when the scan to be performed on the to-be-scanned sheet (4) is platform scan, the sorting (S14) the single-page scanned images according to a page order of the to-be-scanned sheet (4) comprises:
determining (S203) whether the double-page scanned image is a first-side scanned image, wherein the first-side scanned image is a scanned image obtained by scanning a side of the to-be-scanned sheet (4) facing a cover body;
determining to save the single-page scanned image in the first list or the second list according to the determining result;
re-sorting (S301) the single-page scanned images saved in the first list in ascending or descending order according to the page order; and
re-sorting (S301) the single-page scanned images saved in the second list in ascending or descending order according to the page order.

4. The image processing method according to claim 3, wherein the determining to save the single-page scanned image in the first list or the second list according to the determining result comprises:
when the determining result is yes, the single-page scanned images located on one side of the double-page scanned image before splitting is saved in the first list, and the single-page scanned images located on the other side of the double-page scanned image before splitting is saved in the second list; or
when the determining result is no, the single-page scanned images located on one side of the double-page scanned image before splitting is saved in the second list, and the single-page scanned images located on the other side of the double-page scanned image before splitting is saved in the first list.

5. The image processing method according to claim 1, wherein the image processing method further comprises the following step:
rotating (S12) the single-page scanned image or the double-page scanned image according to a placement manner and the page order of the to-be-scanned sheet (4) or a text direction of the scanned image to conform to a reading habit of a user.

6. An image processing apparatus, comprising:
an obtaining unit (100), configured to obtain (S11) a double-page scanned image, wherein the double-page scanned image is obtained by performing double-sided scan on a to-be-scanned sheet (4);
a splitting unit (200), configured to split (S13) the double-page scanned image to obtain single-page scanned images; and
a sorting unit (300), configured to sort the single-page scanned images according to a page order of the to-be-scanned sheet (4), wherein the page order is one of the following orders: from left to right, from right to left, from top to bottom, and from bottom to top, **characterized in that** the sorting unit (300) comprises:
a setting unit, configured to set a first list and a second list;
a saving unit, configured to: according to the page order, place single-page scanned images whose page numbers are 1 to n/2 in the first list, and place single-page scanned images whose page numbers are (n/2)+1 to n in the second list, wherein n represents a total page quantity of a booklet or a book, and n is an even number; and
a sorting subunit, configured to sort the single-page scanned images in the first list and the second list in ascending or descending order according to the page order.

7. The image processing apparatus according to claim 6, wherein the splitting unit (200) comprises:
a determining unit, configured to obtain a width and a height of the double-page scanned image, and determine a relationship between the width and the height of the double-page scanned image; and
a splitting subunit, configured to: when it is determined that the width of the double-page scanned image is greater than the height, split the double-page scanned image equally into two equal-width single-page scanned images; or when it is determined that the height of the double-page scanned image is greater than the width, split the double-page scanned image equally into two equal-height single-page scanned images.

8. The image processing apparatus according to claim 6, wherein the image processing apparatus further comprises a rotation unit, and the rotation unit is configured to rotate (S12) the single-page scanned image or the double-page scanned image according to a placement manner and the page order of the to-be-scanned sheet (4) or a text direction of the scanned image to conform to a reading habit of a user.

9. A storage medium, comprising a program that, when executed in a computer, makes the computer to perform the image processing method according to any one of claim 1 to 5.

## Patentansprüche

1. Bildverarbeitungsverfahren, das Folgendes umfasst:
Erhalten (S11) eines doppelseitig abgetasteten Bilds, wobei das doppelseitig abgetastete Bild erhalten wird, indem eine doppelseitige Abtastung an einem abzutastenden Bogen (4) durchgeführt wird;
Teilen (S13, S202) des doppelseitig abgetasteten Bilds, um einseitig abgetastete Bilder zu erhalten; und
Sortieren (S14) der einseitig abgetasteten Bilder gemäß einer Seitenreihenfolge des abzutastenden Bogens (4), wobei die Seitenreihenfolge eine der folgenden Reihenfolgen ist: von links nach rechts, von rechts nach links, von oben nach unten und von unten nach oben, **dadurch gekennzeichnet, dass** Sortieren (S14) der einseitig abgetasteten Bilder gemäß einer Seitenreihenfolge des abzutastenden Bogens (4) Folgendes umfasst:
Festlegen einer ersten Liste und einer zweiten Liste;
gemäß der Seitenreihenfolge, Platzieren einseitig abgetasteter Bilder, deren Seitenzahlen 1 bis n/2 sind, in der ersten Liste und Platzieren einseitig abgetasteter Bilder, deren Seitenzahlen (n/2)+1 bis n sind, in der zweiten Liste, wobei n eine Gesamtseitenmenge eines Hefts oder eines Buchs darstellt und n eine gerade Zahl ist; und
Sortieren der einseitig abgetasteten Bilder in der ersten Liste und der zweiten Liste in aufsteigender oder absteigender Reihenfolge gemäß der Seitenreihenfolge.

2. Bildverarbeitungsverfahren nach Anspruch 1, wobei das Teilen (S13, S202) des doppelseitig abgetasteten Bilds, um einseitig abgetastete Bilder zu erhalten, Folgendes umfasst:
Erhalten einer Breite und einer Höhe des doppelseitig abgetasteten Bilds;
Bestimmen einer Beziehung zwischen der Breite und der Höhe des doppelseitig abgetasteten Bilds;
wenn bestimmt wird, dass die Breite des doppelseitig abgetasteten Bilds größer als die Höhe ist, Teilen des doppelseitig abgetasteten Bilds gleichmäßig in zwei gleich breite, einseitig abgetastete Bilder; oder
wenn bestimmt wird, dass die Höhe des doppelseitig abgetasteten Bilds größer als die Breite ist, Teilen des doppelseitig abgetasteten Bilds gleichmäßig in zwei gleich hohe, einseitig abgetastete Bilder.

3. Bildverarbeitungsverfahren nach Anspruch 1, wobei, wenn die an dem abzutastenden Bogen (4) durchzuführende Abtastung eine Plattformabtastung ist, das Sortieren (S14) der einseitig abgetasteten Bilder gemäß einer Seitenreihenfolge des abzutastenden Bogens (4) Folgendes umfasst:
Bestimmen (S203), ob das doppelseitig abgetastete Bild ein abgetastetes Bild einer ersten Seite ist, wobei das abgetastete Bild der ersten Seite ein abgetastetes Bild ist, das durch Abtasten einer Seite des abzutastenden Bogens (4) erhalten wird, die zu einem Einbandkörper weist;
Bestimmen, das einseitig abgetastete Bild in der ersten Liste oder der zweiten Liste zu speichern, gemäß dem bestimmten Ergebnis;
Neusortieren (S301) der einseitig abgetasteten Bilder, die in der ersten Liste gespeichert sind, in aufsteigender oder absteigender Reihenfolge gemäß der Seitenreihenfolge; und
Neusortieren (S301) der einseitig abgetasteten Bilder, die in der zweiten Liste gespeichert sind, in aufsteigender oder absteigender Reihenfolge gemäß der Seitenreihenfolge.

4. Bildverarbeitungsverfahren nach Anspruch 3, wobei das Bestimmen, das einseitig abgetastete Bild in der ersten Liste oder der zweiten Liste zu speichern, gemäß dem bestimmten Ergebnis, umfasst, dass:
wenn das Bestimmungsergebnis Ja ist, die einseitig abgetasteten Bilder, die sich auf einer Seite des doppelseitig abgetasteten Bilds befinden, bevor dieses geteilt wird, in der ersten Liste gespeichert werden, und die einseitig abgetasteten Bilder, die sich auf der anderen Seite des doppelseitig abgetasteten Bilds befinden, bevor dieses geteilt wird, in der zweiten Liste gespeichert werden; oder
wenn das Bestimmungsergebnis Nein ist, die einseitig abgetasteten Bilder, die sich auf einer Seite des doppelseitig abgetasteten Bilds befinden, bevor dieses geteilt wird, in der zweiten Liste gespeichert werden, und die einseitig abgetasteten Bilder, die sich auf der anderen Seite des doppelseitig abgetasteten Bilds befinden, bevor dieses geteilt wird, in der ersten Liste gespeichert werden.

5. Bildverarbeitungsverfahren nach Anspruch 1, wobei das Bildverarbeitungsverfahren weiter den folgenden Schritt umfasst:
Rotieren (S12) des einseitig abgetasteten Bilds oder des doppelseitig abgetasteten Bilds gemäß einer Platzierungsweise und der Seitenreihenfolge des abzutastenden Bogens (4) oder einer Textrichtung des abgetasteten Bilds, um einer Lesegewohnheit eines Nutzers zu entsprechen.

6. Bildverarbeitungsvorrichtung, die Folgendes umfasst:
eine Erhalteeinheit (100), die dazu konfiguriert ist, ein doppelseitig abgetastetes Bild zu erhalten (S11), wobei das doppelseitig abgetastete Bild erhalten wird, indem eine doppelseitige Abtastung an einem abzutastenden Bogen (4) durchgeführt wird;
eine Teilungseinheit (200), die dazu konfiguriert ist, das doppelseitig abgetastete Bild zu teilen (S13), um einseitig abgetastete Bilder zu erhalten; und
eine Sortiereinheit (300), die dazu konfiguriert ist, die einseitig abgetasteten Bilder gemäß einer Seitenreihenfolge des abzutastenden Bogens (4) zu sortieren, wobei die Seitenreihenfolge eine der folgenden Reihenfolgen ist: von links nach rechts, von rechts nach links, von oben nach unten und von unten nach oben, **dadurch gekennzeichnet, dass** die Sortiereinheit (300) Folgendes umfasst:
eine Festlegungseinheit, die dazu konfiguriert ist, eine erste Liste und eine zweite Liste festzulegen;
eine Speichereinheit, die für Folgendes konfiguriert ist: gemäß der Seitenreihenfolge, Platzieren einseitig abgetasteter Bilder, deren Seitenzahlen 1 bis n/2 sind, in der ersten Liste, und Platzieren einseitig abgetasteter Bilder, deren Seitenzahlen (n/2)+1 bis n sind, in der zweiten Liste, wobei n eine Gesamtseitenmenge eines Hefts oder eines Buchs darstellt und n eine gerade Zahl ist; und
eine Sortieruntereinheit, die dazu konfiguriert ist, die einseitig abgetasteten Bilder in der ersten Liste und der zweiten Liste in aufsteigender oder absteigender Reihenfolge zu sortieren, gemäß der Seitenreihenfolge.

7. Bildverarbeitungsvorrichtung nach Anspruch 6, wobei die Teilungseinheit (200) Folgendes umfasst:
eine Bestimmungseinheit, die dazu konfiguriert ist, eine Breite und eine Höhe des doppelseitig abgetasteten Bilds zu erhalten und eine Beziehung zwischen der Breite und der Höhe des doppelseitig abgetasteten Bilds zu bestimmen; und
eine Teilungsuntereinheit, die für Folgendes konfiguriert ist: wenn bestimmt wird, dass die Breite des doppelseitig abgetasteten Bilds größer als die Höhe ist, Teilen des doppelseitig abgetasteten Bilds gleichmäßig in zwei gleich breite, einseitig abgetastete Bilder; oder wenn bestimmt wird, dass die Höhe des doppelseitig abgetasteten Bilds größer als die Breite ist, Teilen des doppelseitig abgetasteten Bilds gleichmäßig in zwei gleich hohe, einseitig abgetastete Bilder.

8. Bildverarbeitungsvorrichtung nach Anspruch 6, wobei die Bildverarbeitungsvorrichtung weiter eine Rotationseinheit umfasst und die Rotationseinheit dazu konfiguriert ist, das einseitig abgetastete Bild oder das doppelseitig abgetastete Bild gemäß einer Platzierungsweise und der Seitenreihenfolge des abzutastenden Bogens (4) oder einer Textrichtung des abgetasteten Bilds zu rotieren (S12), um einer Lesegewohnheit eines Nutzers zu entsprechen.

9. Speichermedium, das ein Programm umfasst, das, wenn es auf einem Computer ausgeführt wird, den Computer das Bildverarbeitungsverfahren nach einem der Ansprüche 1 bis 5 durchführen lässt.

## Revendications

1. Procédé de traitement d'image, comprenant :
l'obtention (S11) d'une image numérisée à double page, dans lequel l'image numérisée à double page est obtenue par la réalisation d'une numérisation recto-verso sur une feuille à numériser (4) ;
le fractionnement (S13, S202) de l'image numérisée à double page pour obtenir des images numérisées à page unique ; et
le tri (S14) des images numérisées à page unique selon un ordre de pages de la feuille à numériser (4), dans lequel l'ordre de pages est l'un des ordres suivants : de gauche à droite, de droite à gauche, de haut en bas, et de bas en haut, **caractérisé en ce que** le tri (S14) des images numérisées à page unique selon un ordre de pages de la feuille à numériser (4) comprend :
la définition d'une première liste et d'une deuxième liste ;
selon l'ordre de pages, le placement d'images numérisées à page unique dont des numéros de page sont de 1 à n/2 dans la première liste et le placement d'images numérisées à page unique dont des numéros de page sont de (n/2)+1 à n dans la deuxième liste, dans lequel n représente une quantité totale de pages d'un livret ou d'un livre, et n est un nombre pair ; et
le tri des images numérisées à page unique dans la première liste et dans la deuxième liste par ordre croissant ou décroissant selon l'ordre de pages.

2. Procédé de traitement d'image selon la revendication 1, dans lequel le fractionnement (S13, S202) de l'image numérisée à double page pour obtenir des images numérisées à page unique comprend :
l'obtention d'une largeur et d'une hauteur de l'image numérisée à double page ;
la détermination d'une relation entre la largeur et la hauteur de l'image numérisée à double page ;
lorsqu'il est déterminé que la largeur de l'image numérisée à double page est supérieure à la hauteur, le fractionnement de l'image numérisée à double page uniformément en deux images numérisées à page unique de largeur égale ; ou
lorsqu'il est déterminé que la hauteur de l'image numérisée à double page est supérieure à la largeur, le fractionnement de l'image numérisée à double page uniformément en deux images numérisées à page unique de hauteur égale.

3. Procédé de traitement d'image selon la revendication 1, dans lequel, lorsque la numérisation à réaliser sur la feuille à numériser (4) est une numérisation à plate-forme, le tri (S14) des images numérisées à page unique selon un ordre de pages de la feuille à numériser (4) comprend :
la détermination (S203) si l'image numérisée à double page est une image numérisée de premier côté, dans lequel l'image numérisée de premier côté est une image numérisée obtenue par la numérisation d'un côté de la feuille à numériser (4) faisant face à un corps de couverture ;
la détermination d'enregistrer l'image numérisée à page unique dans la première liste ou dans la deuxième liste en fonction du résultat de détermination ;
le re-tri (S301) des images numérisées à page unique enregistrées dans la première liste par ordre croissant ou décroissant selon l'ordre de pages ; et
le re-tri (S301) des images numérisées à page unique enregistrées dans la deuxième liste par ordre croissant ou décroissant selon l'ordre de pages.

4. Procédé de traitement d'image selon la revendication 3, dans lequel la détermination d'enregistrer l'image numérisée à page unique dans la première liste ou dans la deuxième liste en fonction du résultat du détermination comprend :
lorsque le résultat de détermination est oui, les images numérisées à page unique situées sur un côté de l'image numérisée à double page avant le fractionnement sont enregistrées dans la première liste, et les images numérisées à page unique situées sur l'autre côté de l'image numérisée à double page avant le fractionnement sont enregistrées dans la deuxième liste ; ou
lorsque le résultat de détermination est non, les images numérisées à page unique situées sur un côté de l'image numérisée à double page avant le fractionnement sont enregistrées dans la deuxième liste, et les images numérisées à page unique situées sur l'autre côté de l'image numérisée à double page avant le fractionnement sont enregistrées dans la première liste.

5. Procédé de traitement d'image selon la revendication 1, dans lequel le procédé de traitement d'image comprend en outre l'étape suivante :
la rotation (S12) de l'image numérisée à page unique ou de l'image numérisée à double page selon une manière de placement et l'ordre de pages de la feuille à numériser (4) ou une direction de texte de l'image numérisée pour se conformer à une habitude de lecture d'un utilisateur.

6. Appareil de traitement d'image, comprenant :
une unité d'obtention (100) configurée pour obtenir (S11) une image numérisée à double page, dans lequel l'image numérisée à double page est obtenue par la réalisation d'une numérisation recto-verso sur une feuille à numériser (4) ;
une unité de fractionnement (200) configurée pour fractionner (S13) l'image numérisée à double page pour obtenir des images numérisées à page unique ; et
une unité de tri (300) configurée pour trier les images numérisées à page unique selon un ordre de pages de la feuille à numériser (4), dans lequel l'ordre de pages est l'un des ordres suivants : de gauche à droite, de droite à gauche, de haut en bas, et de bas en haut, **caractérisé en ce que** l'unité de tri (300) comprend :
une unité de définition configurée pour définir une première liste et une deuxième liste ;
une unité d'enregistrement configurée pour : selon l'ordre de pages, placer des images numérisées à page unique dont des numéros de page sont de 1 à n/2 dans la première liste et placer des images numérisées à page unique dont des numéros de page sont de (n/2)+1 à n dans la deuxième liste, dans lequel n représente une quantité totale de pages d'un livret ou d'un livre, et n est un nombre pair ; et
une sous-unité de tri configurée pour trier les images numérisées à page unique dans la première liste et dans la deuxième liste par ordre croissant ou décroissant selon l'ordre de pages.

7. Appareil de traitement d'image selon la revendication 6, dans lequel l'unité de fractionnement (200) comprend :
une unité de détermination configurée pour obtenir une largeur et une hauteur de l'image numérisée à double page, et déterminer une relation entre la largeur et la hauteur de l'image numérisée à double page ; et
une sous-unité de fractionnement configurée pour : lorsqu'il est déterminé que la largeur de l'image numérisée à double page est supérieure à la hauteur, fractionner l'image numérisée à double page uniformément en deux images numérisées à page unique de largeur égale ; ou, lorsqu'il est déterminé que la hauteur de l'image numérisée à double page est supérieure à la largeur, fractionner l'image numérisée à double page uniformément en deux images numérisées à page unique de hauteur égale.

8. Appareil de traitement d'image selon la revendication 6, dans lequel l'appareil de traitement d'image comprend en outre une unité de rotation, et l'unité de rotation est configurée pour faire tourner (S12) l'image numérisée à page unique ou l'image numérisée à double page selon une manière de placement et l'ordre de pages de la feuille à numériser (4) ou une direction de texte de l'image numérisée pour se conformer à une habitude de lecture d'un utilisateur.

9. Support de stockage, comprenant un programme qui, lorsqu'il est exécuté dans un ordinateur, amène l'ordinateur à réaliser le procédé de traitement d'image selon l'une quelconque des revendications 1 à 5.
